# EUROPEAN PATENT SPECIFICATION

(11) **EP 0 206 778 B1**
(45) Date of publication and mention of the grant of the patent: **05.05.1993**
(21) Application number: 86304745.2
(22) Date of filing: 20.06.1986
(51) Int. Cl.: G01J 5/48, G02F 1/13

(54) **Thermal imagers**
Wärmebildvorrichtung
Dispositif d'imagerie thermique

(30) Priority: 21.06.1985 GB 8515789
(43) Date of publication of application: 30.12.1986
(73) Proprietor: BRITISH AEROSPACE PUBLIC LIMITED COMPANY, Farnborough, Hants. GU14 6YU (GB)
(72) Inventor: Makh, Surinder Singh British Aerospace PLC, Filton Bristol, BS12 7QW (GB); Hart, Alan David British Aerospace PLC, Filton Bristol, BS12 7QW (GB); Tunnicliffe, David Leslie British Aerospace PLC, Filton Bristol, BS12 7QW (GB)
(74) Representative: Rooney, Paul Blaise

(56) References cited:
- EP-A- 0 065 397
- GB-A- 2 125 573
- GB-A- 2 163 566
- US-A- 3 114 836
- US-A- 4 148 951

## Description

This invention relates to thermal imagers which use liquid crystals as the sensing elements.

It is known to use liquid crystal cells for thermal imaging. The crystals are contained by transparent plates which form the walls of the cell. In use, the liquid crystal is held at its cholesteric-isotropic phase transition temperature. At this temperature the crystal has a large temperature coefficient of optical rotary power. When infra-red radiation falls on the crystal held at this temperature, it alters the crystal temperature locally, producing changes in phase within the crystal, ie from cholesteric to isotropic. These changes can be measured using a scanning polarimeter which gives an output electronic signal which is proportional to the incident infrared radiation. However, the sensitivity of the liquid crystal cell is reduced due to the walls of the cell absorbing some of the incident radiation and locally heating the crystal. Problems with the flow of the liquid crystal may also occur due to the localised changes in phase caused by this local heating. Impurities on the internal walls of the cell may act as centres of nucleation, ie points onto which the crystals may attach themselves and produce undesirable molecular orientation effects.

US-A-4, 148,951 discloses a thermal imaging device having a support means which also acts as a heat storage means for reducing heat loss from a liquid crystal thermographic sheet mounted thereon. A detection device, in the form of a small flexible thermal imager is provided to measure the temperature change of the thermographic sheet. Unfortunately due to its exposed position, the thermographic sheet suffers from undesirable heat loss which can adversely effect the accuracy of any readings taken. In addition to this, it is necessary to press the thermal imager up against the surface of the thermographic sheet in order to determine the properties of the thermographic sheet. Inaccurate positioning of the thermal imager can adversely effect the accuracy of the device.

Also known are thermal imagers which utilise free-standing chiral smectic C liquid crystal films. These films have thicknesses between 10 to 100 molecules (50-500nm (500 - 5,000 Å)), are known to exhibit a strong temperature dependence in which the pitch of the helix alters with temperature. The change in the pitch of the helix and therefore the temperature change is measured by passing a read beam of polarised light through the film and determining the change in the read beam. By the term free-standing is meant those liquid crystals which have sufficient surface tension to form a film without the necessity of containment plates.

However, thermal imagers of this type are required to have a response time which is less than 50 ms and a sensitivity which enables temperature changes of less than 1K in the scene to be detected. In order to meet the required response time, a film thickness of 0.1µm is needed. This however produces the problem that the change in the read beam may not be large enough to be detectable after it has passed through the film.

It is therefore an object of the invention to provide a thermal imager having a thicker liquid crystal film which enables the change in the read beam to be detectable whilst retaining the response time of the imager.

According to one aspect of the invention, there is provided a thermal imaging system including:-
an infra-red radiation transducer having support means made of heat-retaining material and, a liquid crystal film element supported by said support means and having a surface exposed, with said film element being sensitive to infra-red radiation incident on said surface, and with said support means being operable for retaining at least a part of said incident radiation for a given period of time, and
detector means arranged to detect changes in said film element due to said incident radiation,
characterised in that the imaging system receives infra-red radiation from a remote source, the heat retaining material is transmissive to visible light, said heat sensitive film element is mounted within said support means and is operable to modulate the visible radiation beam in dependence upon the temperature of the film element and the detector means includes illumination means for illuminating the film element with said visible light.

Advantageously, said film element is mounted within a shallow well formed in said support means.

Preferably, said film element and support means are positioned between first and second partially reflective members to enhance the change in said light beam.

Advantageously the system includes means for summing the transmitted portions of the beam to produce a representation of the image.

According to a second aspect of the invention, there is provided an infra-red radiation transducer comprising a support member which is made of heat-retaining material, and a film of heat-sensitive liquid crystal material supported by the support member, characterised in that said support member has portions defining the base and sides of a shallow well open at one surface of the member, said film of heat sensitive liquid crystal material is contained in and supported by the base and sides of said well, infra-red radiation receiving means for receiving infra-red radiation from a remote source and directing it onto the surface of said film which is exposed at said one surface of the member, and visible radiation beam producing means for directing a beam of visible electromagnetic radiation through said film and said member, said heat-retaining material being transmissive of said visible radiation beam and said heat-sensitive film, being operable to modulate the visible radiation beam in dependence upon the temperature of the film.

For a better understanding of the invention, reference will now be made, by way of example, to the accompanying drawings in which:-
Figure 1 is a schematic diagram of a thermal imager comprising a smectic liquid crystal film mounted in an insulating block; and
Figure 2 is a schematic diagram of the figure 1 imager mounted in a Fabry-Perot resonant cavity.

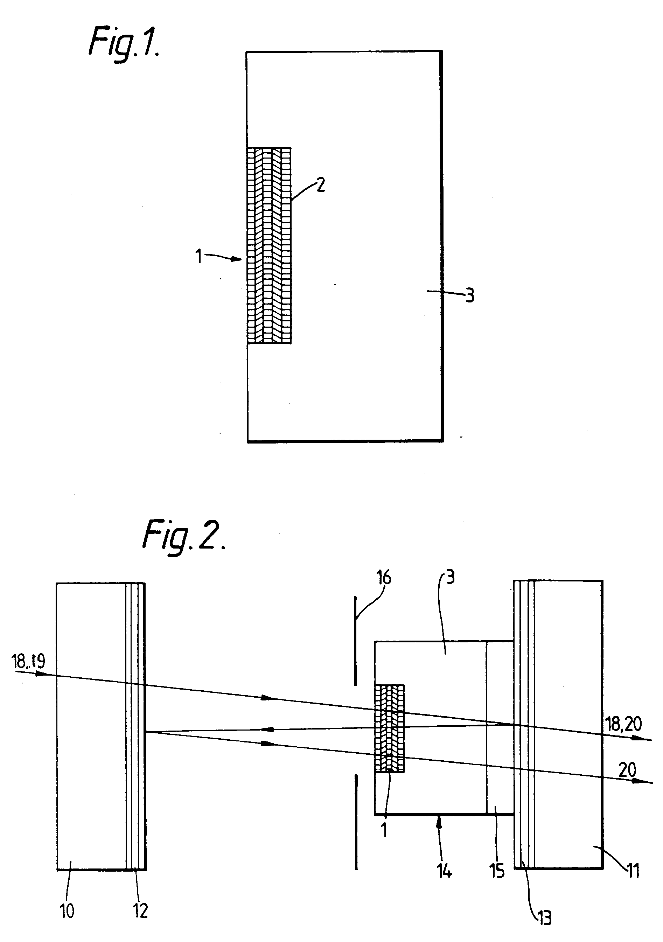

The imager shown in figure 1 comprises a smectic liquid crystal film element 1 mounted in a hole 2 formed in a block 3 of insulating material. The hole 2 is between 6 to 10µm deep ie the film is 60 to 100 times thicker than that for a free-standing film relying on a surface tension effect, and retains the film 1 in a preferred molecular orientation. The insulating block 3 is transparent to radiation in the visible portion of the electromagnetic spectrum, thereby allowing a read beam (not shown) of polarised light from a helium-neon laser to pass through it, and has the purpose of retaining incident infra-red radiation so that the properties of the film can change in response to the incident radiation. The read beam is plane-polarized and emerges from the film 1 elliptically-polarised in response to the temperature change sensed by the film 1. However, this arrangement again has the disadvantage that the read beam may not change sufficiently to enable the temperature change due to the incident radiation to be detected as the beam only passes through the film once. In order to overcome this, the imager may be mounted in Fabry-Perot resonant cavity as shown in figure 2.

The resonant cavity shown in figure 2 comprises a pair of substrates 10, 11 on which are deposited dielectric mirrors 12, 13 respectively. The substrates 10, 11 are required to transmit both infra-red and visible radiation, and if required each one may be made of a different material to the other. The mirrors 12, 13 are partially-reflective and partially-transmissive having a reflectivity, R, of about 94-95%. A thermal imager 14 (as described previously) is mounted in the cavity between the mirrors 12, 13 adjacent a compensator 14 which is in contact with the mirror 13. The compensator 15 nulls out the natural birefringence of the film 1 and the insulator 3 when the imager is in the OFF sate ie a dark background is obtained if the cavity is detuned or a light background if the cavity is tuned under ambient conditions.

An iris 16 is positioned in front of the imager 14 so that the read beam only passes through the active region ie the film 1 of the imager.

In operation, the incident infra-red radiation 18 and the read beam 19 are both incident on the substrate 10 and pass through it and the mirror 12 onto the film 1. The infra-red beam 18 passes into the insulator 3 and exists the cavity via compensator 15, mirror 13 and substrate 11. The read beam 19 also passes through the film 1, insulator 3 and compensator 15, but is partially reflected at the mirror 13 and is directed back through the imager 14 to mirror 12 where it is again partially reflected. The beam 19 passes across the cavity many times but only two reflections are shown in the figure for clarity. The non-reflected parts of the beam 19 ie the transmitted portions 20, pass through the mirror 13 and substrate 11 and are summed to produce a representation of the image which is stored on the film 1 at that time. As mentioned previously, in the OFF state, the background is either dark or light depending on whether the cavity is detuned or tuned. The image stored on the film 1, then acts either to tune or detune the cavity ie the representation containing the image is either a dark background containing a light image or a light background containing a dark image.

The polarization changes observed are from linear to elliptical and back again ie the film 1 changes the plane-polarised beam into an elliptically polarised beam when the beam is passing from left to right and vice versa.

The substrates 10, 11 may be made of a material IRTRAN-2 and the dielectric mirrors 12, 13 may be made from zinc sulphide and cyolite deposited on the substrates.

The enhancement of the read beam 19, which is obtained is related to the mirror reflectivity R ie the enhancement is (1+R)/(1-R). However, this enhancement has to be offset against the amount of radiation absorbed in the substrate 10 and mirror 12.

The response time of the imager 14 when mounted in a Fabry-Perot resonant cavity, depends on the thickness of the insulator 3 behind the film 1 and the heat sinking properties of the compensator 15.

Naturally, the passage of beam 19 through the imager 14 in figure 2 has been exaggerated to show multiple reflections at the dielectric mirrors 12, 13 but in effect, these paths overlap, that is, the beam 18, 19 are both incident on the imager 14, and hence the mirrors 12, 13 normally.

In the embodiments described, a single liquid crystal film is used. It is, of course, possible to use a reticulated structure as disclosed in our UK Patent Application No. 2163566 (published 26.02.86) in which separate imager are positioned in an array with the appropriate thermal isolation being provided between each imager unit.

## Claims

1. A thermal imaging system including:-
an infra-red radiation transducer having support means (3) made of heat-retaining material and a liquid crystal film element (1) supported by said support means (3) and having a surface exposed, with said film element being sensitive to infra-red radiation (18) incident on said surface, and with said support means being operable for retaining at least a part of said incident radiation (18) for a given period of time, and
detector means arranged to detect changes in said film element (1) due to said incident radiation;
characterised in that the imaging system receives infra-red radiation (18) from a remote source, the heat retaining material (3) is transmissive to visible light (19), said heat sensitive film element (1) is mounted within said support means (3) and is operable to modulate the visible radiation beam (19) in dependence upon the temperature of the film element (1) and the detector means includes illuminating means for illuminating the film element (1) with said visible light (19)

2. A system according to claim 1, wherein said film element (1) is mounted within a shallow well formed in said support means (3).

3. A system according to claim 1 or claim 2 wherein said visible light is linearly polarised.

4. A system according to any one of the preceding claims, wherein said film element (1) and support means (3) are positioned between first and second partially reflective members (12, 13) to enhance the change in said light beam.

5. A system according to claim 4, wherein said first and second partially reflective members (12, 13) are dielectric mirrors formed on respective substrate elements (10, 11) the mirrors and substrate elements being at least partially transmissive to infra-red radiation.

6. A system according to claim 4 or 5, wherein said support means is positioned adjacent compensator means (15) which is operable to null out the natural birefringence of said film element (1), said compensator means (15) being in contact with said second partially reflective member (13).

7. A system according to any one of claims 2 to 6, wherein said detector means further includes diaphragm means (16) for ensuring that said visible light is only incident on said film element (1).

8. A system according to any one of the preceding claims including means for summing the transmitted portions of the beam to produce a representation of the image.

9. An infra-red radiation transducer comprising a support member (3) which is made of heat-retaining material and a film of heat-sensitive liquid crystal material (1) supported by the support member 3, characterised in that said support member (3) has portions defining the base and sides of a shallow well (2) open at one surface of the member (3), said film of heat sensitive liquid crystal material (1) is contained in and supported by the base and sides of said well (2), infra-red radiation receiving means for receiving infra-red radiation from a remote source and directing it onto the surface of said film (1) which is exposed at said one surface of the member (3), and visible radiation beam producing means for directing a beam of visible electromagnetic radiation through said film (1) and said member (3), said heat-retaining material (3) being transmissive of said visible radiation beam and said heat-sensitive film (1) being operable to modulate the visible radiation beam in dependence upon the temperature of the film (1).

## Patentansprüche

1. Thermisches Abbildungssystem, mit den folgenden Merkmalen:
einem Wandler für Infrarotstrahlung, der einen Träger (3) aus einem Wärmespeichermaterial aufweist und einem Flüssigkristallfilmelement (1), welches vom Träger (3) gehaltert wird und eine freiliegende Oberfläche aufweist, wobei das Filmelement für Infrarotstrahlung (18) empfindlich ist, die auf die Oberfläche einfällt und wobei der Träger wenigstens einen Teil der einfallenden Strahlung (18) während einer gegebenen Zeitdauer zurückhält, und
einem Detektor, der Änderungen in dem Filmelement (1) infolge der einfallenden Strahlung feststellt;
dadurch gekennzeichnet, daß das Abbildungssystem Infrarotstrahlung (18) von einer fernliegenden Quelle empfängt, daß das Wärmespeichermaterial (3) für sichtbares Licht (19) durchlässig ist, daß das wärmeempfindliche Filmelement (1) innerhalb des Trägers (3) gelagert ist und eine Modulation des sichtbaren Lichtstrahls (19) in Abhängigkeit von der Temperatur des Filmelementes (1) bewirkt und daß der Detektor Beleuchtungsmittel aufweist, um das Filmelement (1) mit dem sichtbaren Licht (19) zu beleuchten.

2. System nach Anspruch 1,
bei welchem das Filmelement (1) in einer flachen Vertiefung angeordnet ist, die in dem Träger (3) ausgeformt ist.

3. System nach den Ansprüchen 1 oder 2,
bei welchem das sichtbare Licht linear polarisiert ist.

4. System nach einem der vorhergehenden Ansprüche, bei welchem das Filmelement (1) und der Träger (3) zwischen einem ersten und einem zweiten teilreflektierenden Körper (12,13) angeordnet sind, um die Änderung in dem Lichtstrahl zu vergrößern.

5. System nach Anspruch 4,
bei weichem der erste und zweite teilweise reflektierende Körper (12,13) als dielektrische Spiegel ausgebildet sind, die auf einem jeweiligen Substratelement (10,11) ausgebildet sind, wobei Spiegel und Substratelemente wenigstens teildurchlässig für Infrarotstrahlung sind.

6. System nach Anspruch 4 oder 5,
bei welchem der Träger benachbart zu einem Kompensator (15) angeordnet ist, der die natürliche Doppelbrechung des Filmelementes (1) auslöscht, wobei der Kompensator (15) in Berührung mit dem zweiten, teilweise reflektierenden Körper (13) steht.

7. System nach einem der Ansprüche 2 bis 6,
bei welchem der Detektor außerdem eine Blende (16) aufweist, um zu gewährleisten, daß das sichtbare Licht nur auf das Filmelement (1) auftrifft.

8. System nach einem der vorhergehenden Ansprüche,
welches Mittel aufweist, um die durchgelassenen Anteile des Strahles zu summieren und um eine Repräsentation des Bildes zu erzeugen.

9. Infrarotstrahlungswandler, der einen Träger (3) aufweist, welcher aus Wärmespeichermaterial besteht und einen Film aus wärmeempfindlichem Flüssigkristallmaterial (1) trägt, dadurch gekennzeichnet, daß der Träger (3) Abschnitte besitzt, die die Basis und die Seiten einer flachen Vertiefung (2) definieren, die an einer Oberfläche des Trägers (3) offen ist, daß der Film aus wärmeempfindlichem Flüssigkristallmaterial (1) in der Vertiefung (2) eingesetzt und von der Basis und den Seiten der Vertiefung abgestützt ist, daß ein Infrarotstrahlungsempfänger die Infrarotstrahlung von einer fernliegenden Quelle empfängt und sie auf die Oberfläche des Films (1) richtet, der auf der einen Oberfläche des Körpers (3) frei liegt und daß einen sichtbaren Strahl erzeugende Mittel einen Strahl sichtbarer elektromagnetischer Strahlung durch den Film (2) und den Körper (3) richten, wobei das Wärmespeichermaterial (3) für diese sichtbare Strahlung durchlässig ist und der wärmeempfindliche Film (1) den sichtbaren Strahl in Abhängigkeit von der Temperatur des Films (1) moduliert.

## Revendications

1. Système d'imagerie thermique comprenant :
. un transducteur de rayonnement infra-rouge comportant un moyen de support (3) réalisé en matériau conservant la chaleur et un élément (1) en pellicule de cristaux liquides supporté par ledit moyen de support (3) et présentant une surface exposée, ledit élément de pellicule étant sensible au rayonnement infra-rouge (18) tombant sur ladite surface, et ledit moyen de support pouvant fonctionner pour conserver au moins une partie du dit rayonnement incident (18) pendant un laps de temps donné, et
. un moyen de détecteur disposé de manière à détecter des changements dans ledit élément de pellicule (1) dus audit rayonnement incident;
caractérisé en ce que le système d'imagerie reçoit un rayonnement infra-rouge (18) à partir d'une source située à distance, le matériau conservant la chaleur (3) transmet la lumière visible (19), ledit élément de pellicule sensible à la chaleur (1) est monté à l'intérieur dudit moyen de support (3) et sert à moduler le faisceau de rayonnement visible (19) en fonction de la température de l'élément de pellicule (1) et le moyen de détecteur comporte un moyen d'éclairage pour éclairer l'élément de pellicule (1) avec ladite lumière visible (19).

2. Système selon la revendication 1, dans lequel ledit élément de pellicule (1) est monté à l'intérieur d'une cavité peu profonde ménagée dans ledit moyen de support (3).

3. Système selon la revendication 1 ou la revendication 2, dans lequel ladite lumière visible est polarisée linéairement.

4. Système selon l'une quelconque des revendications précédentes, dans lequel lesdits éléments de pellicule (1) et moyen de support (3) sont placés entre des premier et second éléments à réflexion partielle (12, 13) pour renforcer le changement dans ledit faisceau lumineux.

5. Système selon la revendication 4, dans lequel lesdits premier et second éléments à réflexion partielle (12, 13) sont des miroirs diélectriques formés sur des éléments de substrat respectifs (10, 11), les miroirs et les éléments de substrat transmettant au moins partiellement le rayonnement infra-rouge.

6. Système selon la revendication 4 ou 5, dans lequel ledit moyen de support est placé dans le voisinage d'un moyen de compensateur (15) qui sert à annuler la biréfringence naturelle du dit élément de pellicule (1), ledit moyen de compensateur (15) étant en contact avec ledit second élément à réflexion partielle (13).

7. Système selon l'une quelconque des revendications 2 à 6, dans lequel ledit moyen de détecteur comprend en outre un moyen de diaphragme (16) pour assurer que ladite lumière visible ne tombe que sur ledit élément de pellicule (1).

8. Système selon l'une quelconque des revendications précédentes, comprenant un moyen pour additionner les parties transmises du faisceau afin de produire une représentation de l'image.

9. Transducteur de rayonnement infra-rouge comprenant un élément de support (3) qui est réalisé en matériau conservant la chaleur et une pellicule de matière en cristaux liquides sensible à la chaleur (1) supportée par l'élément de support (3), caractérisé en ce que ledit élément de support (3) comporte des parties définissant la base et les côtés d'une cavité peu profonde (2) ouverte à une surface de l'élément (3), ladite pellicule de matière en cristaux liquides sensible à la chaleur (1) est contenue dans et supportée par la base et les côtés de ladite cavité (2), un moyen de réception de rayonnement infra-rouge afin de recevoir un rayonnement infra-rouge provenant d'une source située à distance et de le diriger sur la surface de ladite pellicule (1) qui est exposée au droit de ladite surface de l'élément (3), et un moyen de production de faisceau de rayonnement visible afin de diriger un faisceau de rayonnement électromagnétique visible à travers ladite pellicule (1) et ledit élément (3), ledit matériau conservant la chaleur (3) transmettant ledit faisceau de rayonnement visible et ladite pellicule sensible à la chaleur (1) servant à moduler le faisceau de rayonnement visible en fonction de la température de la pellicule (1).
